# EUROPEAN PATENT APPLICATION

(11) **EP 3 153 029 A1**
(43) Date of publication of application: **12.04.2017**
(21) Application number: 16193013.6
(22) Date of filing: 10.10.2016
(51) Int. Cl.: A23L 3/3445, A23L 3/358, A23B 7/152

(54) **APPARATUS FOR TREATMENT OF FOOD PRODUCTS**

(30) Priority: 11.10.2015 EP 15189250
(71) Applicant: Gruppo Zernike S.R.L., 47030 San Mauro Pascoli (FC) (IT)
(72) Inventor: MOLINARI, Giuseppe, 47030 San Mauro Pascoli (FC) (IT)

(57) **Abstract**

An apparatus (A) for treatment of food products, comprising a structure (S) provided with a container cabinet (1) defining a treatment chamber (2) within which said food products are adapted to be introduced and arranged, at least fan / air extracting operating means (4) from said chamber (2), means for generating moisture with diffusion and humidity control in said chamber (2) with relative collection (5) of condensate, and a ozone generating group (3) for spreading and injecting said ozone at least within said chamber (2).

## Description

The present invention relates relates to an apparatus for treatment of food products.

The present invention is advantageously employed for the treatment and complete management of food products, for example meat in general, sausages or the like, or milk products, such as cheese or equivalent products, or fruits, vegetables, mushrooms, aromatic and officinal herbs, in order to submit the products in the processes of maturation, maturing, smoking, drying or equivalent processes, to which the following description will make explicit reference without thereby losing generality.

Apparatuses are known for the treatment of food products, which are of the type comprising in general to a parallelepiped container cabinet structure for containing, inside, the food products to be treated.

Such container is provided with operating member means adapted to ensure, within the same container, of constant environmental conditions, such as a predefined constant temperature, a percentage of constant moisture and simultaneously to allow forced circulation inside the container of a filtered air flow .

At present, these known apparatuses are not always perfectly capable of ensuring adequate and effective preservation over time, or of a reduction of the times of treatment, and of a food biosecurity of the processed products. The object of the present invention is to overcome this considerable drawback of the known technique.

In particular, the purpose of the present invention is to provide an apparatus for treatment of food products which is able to ensure, with maximum efficiency and guarantee the optimal preservation and security of food products disposed within the same apparatus during the treatment.

The structural and functional characteristics of the present invention and its advantages over the known prior art will become even clearer and more evident from the underlying claims, and in particular from an examination of the following description made with reference to the two accompanying figures, which show two views in respective schematic perspective of a preferred but not limiting embodiment of the apparatus in question to the present invention.

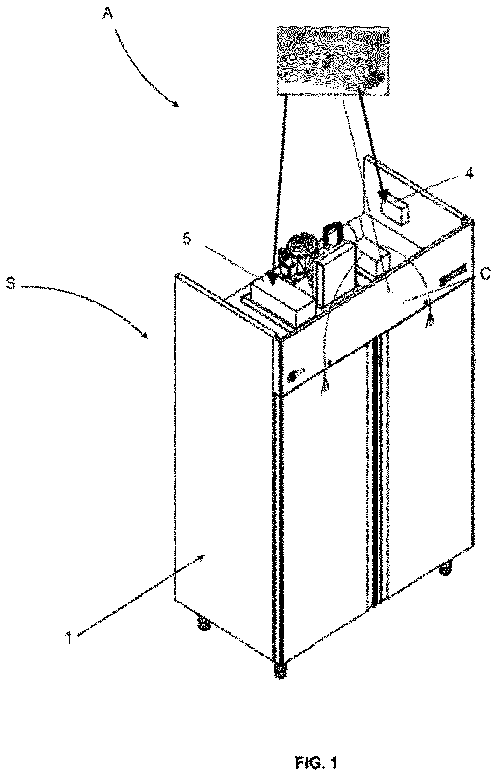

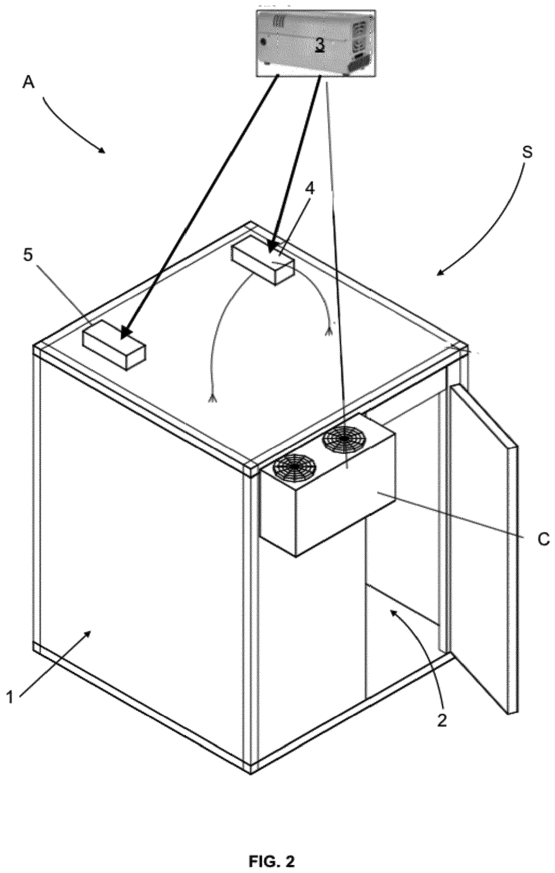

With reference to the enclosed figures 1 and 2, with A is globally indicated an apparatus for for the treatment and complete management of food products, for example meat in general, sausages or the like, or milk products, such as cheese or equivalent products, or fruits, vegetables, mushrooms, aromatic and officinal herbs, in order to submit the products in the processes of maturation, maturing, smoking, drying or equivalent processes.

The apparatus A comprises in known manner a structure S with parallelepiped container cabinet 1 adapted to define a treatment chamber 2 (figure 2) within which the food products to be treated (not illustrated) are adapted to be introduced and arranged

The container 1 is provided with known operating members (not shown), including, for example, refrigerating means that may ensure inside the container 1 a constant prefixed and programmable temperature, and operating means adapted to generate constant moisture and forced circulation inside the container 1 of a filtered air flow.

The container 1 comprises and / or supports, fixed directly to it, according to the present invention, a ozone generating group 3, electrically connected directly to a control unit C of the electrical system of the structure S.

In detail, the group 3 is adapted to produce ozone from spreading and injecting, via conduits known and not illustrated, inside the chamber 2, with delivery times and quantity in grams of ozone dispensed, mass by mass / weight of the food products arranged inside the chamber 2, in order to allow to reduce the colonies of bacteria and mold or pollutants present in contact with food products, lengthening their conservation and ensuring the ideal ripening and healthy food while keeping to a minimum the presence of molds and bacteria, so as to realize treatments with operating more high temperatures compared to traditional temperatures with consequential reduction of treatment and management time, in addition to guarantee the biosecurity of the food product.

Group 3 can also be adapted to produce ozone from spreading and injecting, into electronically programmed mode and controlled, also in a fan / group 4 for extracting air from the inside of the chamber 2 in order to sanitize the chamber 2, particularly in technical parts manually unreachable for sanitizing avoiding danger, and subsequent potential hazards of bacterial contamination, when treatment is terminated and / or to remove any odors, fumes, impregnating fumes due to the same treatment.

The group 3 can also be adapted to produce ozone from spreading and injecting, in the programmed mode and controlled electronically, even within a external condensate collection pan 5 (eg. Defrost water generated by chillers organs), of a group of humidity generator, as an integral part of the apparatus A, in order to allow the production of humidity required during the maturation functionality / maturation and ripening of food products disposed within the chamber 2.

In this way, there is achieved a connection between the ozone molecule and the humidity 'hygroscopic, the moisture which' is kept stable in the selected percentage through the control of a known humidity probe, inside the container 1, to reduce the drop weight and the food treatment times so as to extend the life of the food product and to increase the biological safety.

This allows to overcome the problem of water supply from mains power when you are unable to supply.

The ozone treatment planned in pan 5 condensate collection also ensures water perfectly sanitized.

## Claims

1. An apparatus (A) for treatment of food products, comprising a structure (S) provided with a container cabinet (1) defining a treatment chamber (2) within which said food products are adapted to be introduced and arranged, and at least fan / air extracting operating means (4) from said chamber (2) and means for generating moisture with diffusion and humidity control in said chamber (2) with relative collection (5) of condensate, **characterized in that** it further comprises a ozone generating group (3) for spreading and injecting said ozone at least within said chamber (2).

2. Apparatus according to claim 1, **characterized in that** said ozone generating group (3) is further adapted to spread ozone also to said fans / air extracting operating means (4).

3. Apparatus according to claim 1 or 2, **characterized in that** said ozone generating group (3) is further adapted to spread ozone also to said means for generating moisture with diffusion and humidity control in said chamber (2) with relative collection (5) of condensate.

4. Apparatus according to one or more of claims 1 to 3, **characterized in that** said ozone generating group (3) is connected to a control unit (C) of said apparatus (A).
